Europäisches Patentamt

European Patent Office

Office européen des brevets

(19)

(11) **EP 1 396 089 B1**

(12) **EUROPÄISCHE PATENTSCHRIFT**

(45) Veröffentlichungstag und Bekanntmachung des Hinweises auf die Patenterteilung:
**05.10.2005   Patentblatt 2005/40**

(51) Int Cl.$^7$: **H04B 1/30**, H04L 25/06

(21) Anmeldenummer: 02737858.7

(86) Internationale Anmeldenummer:
**PCT/DE2002/002033**

(22) Anmeldetag: **04.06.2002**

(87) Internationale Veröffentlichungsnummer:
**WO 2002/101948 (19.12.2002 Gazette 2002/51)**

(54) **VERFAHREN ZUR KOMPENSATION EINER STUFENFÖRMIGEN DC-STÖRUNG IN EINEM DIGITALEN BASISBANDSIGNAL EINES HOMODYN-FUNKEMPFÄNGERS**

METHOD FOR THE COMPENSATION OF A STEPPED DC-INTERFERENCE IN A DIGITAL BASE BAND SIGNAL IN A HOMODYNE RADIO RECEIVER

PROCEDE DE COMPENSATION D'UNE INTERFERENCE ECHELONNEE DE COURANT CONTINU DANS UN SIGNAL DE BANDE DE BASE NUMERIQUE D'UN RECEPTEUR RADIO HOMODYNE

(84) Benannte Vertragsstaaten:
**DE DK FI FR GB IT**

(30) Priorität: **11.06.2001   DE 10128236**

(43) Veröffentlichungstag der Anmeldung:
**10.03.2004   Patentblatt 2004/11**

(73) Patentinhaber: **Infineon Technologies AG**
**81669 München (DE)**

(72) Erfinder:
  • **CUJ , Michael**
    **81543 München (DE)**
  • **EIBL, Stefan**
    **84416 Taufkirchen (DE)**
  • **HERZINGER, Stefan**
    **80686 München (DE)**
  • **KRÜGER, Martin**
    **80995 München (DE)**
  • **WU, Xiaofeng**
    **81735 München (DE)**
  • **YANG, Bin**
    **81735 München (DE)**

(74) Vertreter: **Lange, Thomas et al**
**Patentanwälte**
**Lambsdorff & Lange**
**Dingolfinger Strasse 6**
**81673 München (DE)**

(56) Entgegenhaltungen:
**WO-A-00/45523          WO-A-01/05025**
**US-A- 5 579 347          US-A- 5 838 735**

## Beschreibung

Die Erfindung betrifft ein Verfahren zur Kompensation einer stufenförmigen DC-Störung in einem digitalen Basisbandsignal eines Homodyn-Funkempfängers, insbesondere Homodyn-Mobilfunkempfängers.

In den letzten Jahren haben homodyne Mobilfunkempfänger immer mehr an Bedeutung gewonnen. Da homodyne Mobilfunkempfänger keine Zwischenfrequenzstufe aufweisen, kann eine höhere Integration auf dem Chip erreicht werden, wodurch sich die Kosten des Mobilfunkempfängers reduzieren.

Das Hauptproblem der homodynen Empfänger-Architektur besteht darin, dass aufgrund von Nichtlinearitäten im Hochfrequenz-(HF-)Empfänger Gleichanteile im Quadratur-demodulierten Signal am Ausgang der Mischerstufe auftreten, welche die Empfangsqualität des Mobilfunkempfängers beeinträchtigen. Diese Gleichanteile werden im folgenden gemäß üblichem Sprachgebrauch als DC-(Direct Current-)Offset bezeichnet. Der DC-Offset muss bei der Basisband-Signalbearbeitung korrigiert werden, da er die Entzerrung des Empfangssignals beeinträchtigt und zu einer erhöhten Bitfehlerrate im Empfänger führt.

In homodynen Basisband-Empfängern wird üblicherweise der DC-Offset innerhalb eines Bursts als konstant angenommen, geschätzt, und vor der Entzerrung des Basisbandsignals aus diesem beseitigt. Schwierigkeiten ergeben sich bei diesen Verfahren dann, wenn innerhalb eines Bursts eine relativ große, stufenförmige Änderung des DC-Offsets auftritt. In diesem Fall liefert die Schätzung des DC-Offsets über einen Burst einen Mittelwert, der weder dem DC-Offset vor der stufenförmigen Änderung noch dem DC-Offset hinter der stufenförmigen Änderung entspricht. Dies hat eine schlechte Entzerrung dieses Bursts zur Folge und wirkt sich somit nachteilig auf die erreichbare Signalqualität aus.

In den U.S.-Patentschriften 6,115,593 und 6,148,047 werden analoge Schaltungskonzepte zur DC-Offset-Kompensation in einem homodynen Empfänger vorgestellt.

In der europäischen Patentanmeldung EP 0 594 894 A1 wird ein Verfahren zur Offset-Korrektur in einem TDMA-(Time Division Multiple Access-)Empfänger beschrieben, bei welchem eine Korrektur des DC-Offsets sowohl im analogen als auch im digitalen Bereich des Empfängers unter Berücksichtigung von Betriebsparametern wie Verstärkung und Empfangsfrequenz vorgenommen wird. Die Meßzeit zur Ermittlung des DC-Offsets beträgt mindestens einen Zeitschlitz.

Aus der Druckschrift US 5 579 347 ist ein Verfahren und eine entsprechende Vorrichtung bekannt, bei denen der zeitliche Verlauf einer stufenförmigen DC-Störung im Basisbandsignal eines Homodyn-Funkempfängers innerhalb eines Bursts ermittelt und aus dem Basisbandsignal herausgerechnet wird. Dazu wird die Zeitlage ermittelt, bei welcher die stufenförmige DC-Störung innerhalb eines Bursts auftritt. In einem weiteren Schritt wird die Höhe der stufenförmigen DC-Störung geschätzt. Daraus wird der zeitliche Verlauf der stufenförmigen DC-Störung berechnet, welcher von dem digitalen Basisbandsignal subtrahiert wird.

Der Erfindung liegt die Aufgabe zugrunde, ein Verfahren zur Kompensation einer DC-Störung in einem homodynen Funkempfänger anzugeben, welches eine verbesserte Kompensation gegenüber aus dem Stand der Technik bekannten Verfahren ermöglicht.

Die der Erfindung zugrunde liegende Aufgabenstellung wird durch die Merkmale des Anspruchs 1 gelöst.

Demnach basiert die Erfindung auf der Idee, verschiedene zeitliche Verläufe einer stufenförmigen DC-Störung im Basisbandsignal eines Homodyn-Funkemfängers innerhalb eines Bursts zu berechnen. Über eine Auswertung und anschließende Auswahl wird ein geeigneter Verlauf bestimmt, welcher aus dem Basisbandsignal herausgerechnet wird. Dabei wird in einem ersten Schritt eine Zeitlage Tst ermittelt, bei welcher die stufenförmige DC-Störung innerhalb eines Bursts auftritt. In einem weiteren Schritt werden zeitliche Verläufe der stufenförmigen DC-Störung für mehrere Zeitlagen um Tst berechnet. Dann werden diese Verläufe aus dem digitalen Basisbandsignal zur Erzeugung verschiedener stufenkorrigierter Basisbandsignalversionen herausgerechnet. Anschließend werden die auf diese Weise erhaltenen verschiedenen stufenkorrigierten Basisbandsignalversionen gemäß einem vorgegebenen Kriterium ausgewertet. Schließlich wird eine der stufenkorrigierten Basisbandsignalversionen in Abhängigkeit von dem Auswerteergebnis ausgewählt.

Dadurch wird erreicht, dass die stufenförmige DC-Störung im Basisbandsignal erkannt und korrekt (das heisst als Stufenverlauf) bei der Kompensation berücksichtigt wird. Hierdurch wird eine verbesserte AM-Unterdrückung erreicht, was im folgenden noch näher erläutert wird. Zusätzlich wird die Genauigkeit der Störungskompensation verbessert, da das stufenkorrigierte Basisbandsignal für mehrere Zeitlagen um die ermittelte Zeitlage Tst berechnet wird und die geeignetste Version ausgewählt wird.

Eine bevorzugte Ausgestaltung der Erfindung kennzeichnet sich dadurch, dass in einem weiteren Schritt, der vor dem ersten Schritt ausgeführt wird, die Höhe der stufenförmigen DC-Störung durch getrenntes Auswerten des Basisbandsignals zeitlich vor und hinter Tst geschätzt wird. Unter Berücksichtigung der geschätzten Höhe der DC-Störung wird dann der zeitliche Verlauf der stufenförmigen DC-Störung berechnet. Das Herausrechnen der stufenförmigen Verläufe erfolgt durch Subtraktion der berechneten zeitlichen Verläufe der DC-Störung von dem digitalen Basisbandsignal, wodurch verschiedene stufenkorrigierte Basisbandsignalversionen erzeugt werden.

Durch die genannten Parameter (Zeitlage Tst und Höhe der stufenförmigen DC-Störung) kann eine vom Rechenaufwand vertretbare und ausreichend genaue Berücksichtigung der stufenförmigen Störung innerhalb eines Bursts bei der DC-Offset-Korrektur erzielt werden.

Ferner können weitere Einflußgrößen bei der erfindungsgemäßen Kompensation der DC-Störung berücksichtigt werden. In diesem Zusammenhang kennzeichnet sich eine vorteilhafte Verfahrensvariante der Erfindung dadurch, dass in einem ersten Schritt die Position von Tst innerhalb des betrachteten Bursts ausgewertet wird, und in einem zweiten Schritt anhand des Auswerteergebnisses entschieden wird, ob und/oder gemäß welcher Rechenvorschrift die Erzeugung des stufenkorrigierten Basisbandsignals durchgeführt wird. Auf diese Weise kann in Abhängigkeit von der ermittelten Zeitlage Tst zwischen unterschiedlichen Abläufen des Verfahrens umgeschaltet werden.

Beispielsweise können erste Zeitintervalle bestimmter Intervalllänge am Anfang und/oder am Ende des Bursts vorgegeben sein, und die Korrektur der stufenförmigen DC-Störung nur dann durchgeführt werden, wenn Tst außerhalb dieser ersten Zeitintervalle liegt. Durch diese Maßnahme wird sichergestellt, dass eine Korrektur der stufenförmigen DC-Störung dann nicht durchgeführt wird, wenn sie keinen besonderen Gewinn erwarten läßt, weil sich die DC-Stufe unmittelbar in der Nähe des Burst-Anfangs oder des Burst-Endes befindet.

Eine weitere Möglichkeit, die Position der DC-Stufe innerhalb eines Bursts bei der Durchführung des erfindungsgemäßen Verfahrens zu berücksichtigen, besteht darin, dass, sofern Tst innerhalb eines zweiten Zeitintervalls in dem Burst liegt, eine Erzeugung des stufenkorrigierten Basisbandsignals mittels verschiedener berechneter zeitlicher Verläufe der stufenförmigen DC-Störung vorgenommen wird. Da die Erzeugung des stufenkorrigierten Basisbandsignals auf diese Art und Weise eine Verbesserung der Empfangsqualität von Datensymbolen im Bereich der Stufenflanke ermöglicht, wird durch diese Maßnahme erreicht, dass auch "mitten in der Störung" liegende Signalanteile so gut wie möglich DC-Offset-stufenkompensiert werden.

Dies ist besonders dann von Vorteil, wenn die stufenförmige DC-Störung in eine Trainingssequenz des Bursts fällt. Für diesen Fall ist eine besonders genaue Kompensation der stufenförmigen DC-Störung erforderlich, weil die Trainingssequenz für die Kanalschätzung verwendet wird, deren Genauigkeit wiederum Einfluß auf die Qualität der Entzerrung der benachbarten nachrichtentragenden Signalabschnitte des Bursts hat.

Eine besonders bevorzugte Ausführungsform des erfindungsgemäßen Verfahrens kennzeichnet sich dadurch, dass die Schätzung der Höhe der stufenförmigen DC-Störung unter Berücksichtigung eines Schutzzeitintervalls um die ermittelte Zeitlage Tst der DC-Störung herum erfolgt, wobei das Basisbandsignal innerhalb des Schutzzeitintervalls bei der Schätzung der Höhe der DC-Störung unberücksichtigt bleibt. Durch das Schutzzeitintervall wird erreicht, dass Ungenauigkeiten beziehungsweise Unsicherheiten bei der Festlegung von Tst keinen oder nur einen geringfügigen Einfluß auf das Ergebnis der Stufenhöhenschätzung haben, weil Signalwerte, von denen aufgrund der genannten Unsicherheit nicht ausgeschlossen werden kann, dass sie zum Flankenbereich der DC-Stufe gehören, generell unberücksichtigt bleiben.

Weitere vorteilhafte Ausgestaltungen der Erfindung sind in den Unteransprüchen angegeben.

Die Erfindung wird nachfolgend anhand eines Ausführungsbeispiels und Varianten derselben unter Bezugnahme auf die Zeichnung erläutert; in dieser zeigt:

Fig. 1      eine schematische Darstellung eines Empfangssignalpfads beim Heterodyn-Empfängerkonzept in Form eines Blockschaltbilds;

Fig. 2      ein Diagramm, in welchem eine stufenförmige DC-Störung als Spannungssignal über der Zeit dargestellt ist;

Fig. 3a     eine schematische Darstellung einer Burst-Struktur;

Fig. 3b     eine schematische Darstellung von zu einer stufenförmigen DC-Störung berechneten Stufensignalen innerhalb des Bursts der Fig. 3a sowie eine Darstellung von Abschnitte des Bursts, die für eine DC-Offset-Schätzung links und rechts von einem Triggerzeitpunkt herangezogen werden;

Fig. 4a     einen berechneten zeitlichen Verlauf einer stufenförmigen DC-Störung unter Zugrundelegung eines Stufenmodells mit sprunghaftem Flankenanstieg;

Fig. 4b     einen berechneten zeitlichen Verlauf einer stufenförmigen DC-Störung unter Zugrundelegung eines Stufenmodells mit rampenartigem Anstieg der Stufenflanke;

Fig. 5a     eine Darstellung verschiedener zeitlicher Verläufe gemäß Fig. 4a bei einer Erzeugung des stufenkorrigierten Basisbandsignals mittels verschiedener zeitlicher Verläufe;

Fig. 5b     eine Darstellung verschiedener zeitlicher Verläufe gemäß Fig. 4b bei einer Erzeugung des stufenkorrigierten Basisbandsignals mittels verschiedener zeitlicher Verläufe; und

Fig. 6    ein Ablaufdiagramm für die DC-Stufen-Kompensation mittels verschiedener zeitlicher Verläufe unter Zugrundelegung des Stufenmodells mit sprunghaftem Flankenanstieg nach Fig. 5a.

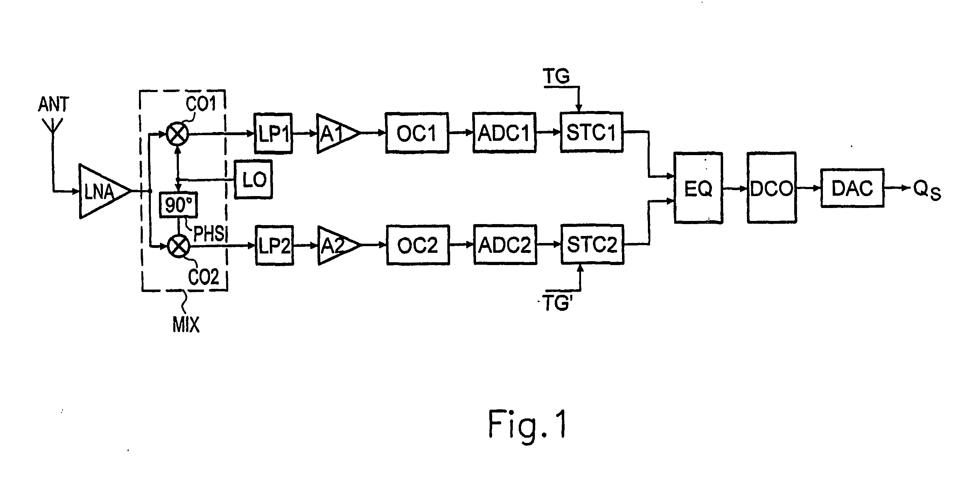

Fig. 1 dient der Erläuterung des Prinzips eines Heterodyn-Empfängers und zeigt anhand eines Blockdiagramms den Signalpfad desselben.

Der Empfänger weist eine Antenne ANT auf, über welche ein Funksignal empfangen und einem rauscharmen Verstärker LNA zugeleitet wird. Das Ausgangssignal des Verstärkers LNA wird einem Mischer MIX zugeführt, welcher ein direktes Heruntermischen des Empfangssignals in das Basisband sowie eine Aufspaltung des Empfangssignals in die I-und Q-Zweige vornimmt. Der Mischer MIX weist zu diesem Zweck zwei Mischstufen CO1 und CO2 auf, welche mit der Trägerfrequenz des Empfangssignals um 90° phasenverschoben zueinander angesteuert werden. Die Trägerfrequenz wird in dem Oszillator LO erzeugt und von dem Phasenschieber PHS phasenverschoben.

Die beiden analogen Basisband-Ausgänge des Mischers MIX werden in Tiefpassfiltern LP1 bzw. LP2 spektral geformt und mittels Verstärkern A1 bzw. A2 verstärkt.

In den Signalwegen hinter den Verstärkern A1 und A2 sind optionale analoge DC-Offset-Korrekturstufen OC1 und OC2 dargestellt, welche jeweils eine Korrektur des Signal-DC-Offsets im analogen Bereich ausführen. Derartige DC-Offset-Korrekturstufen sind im Stand der Technik bekannt und verhindern z.B. eine Übersteuerung der im Signalweg hinter diesen Stufen vorgesehenen Analog-Digital-Umsetzer ADC1 bzw. ADC2.

Die Analog-Digital-Umsetzer ADC1, ADC2 digitalisieren die analogen I- und Q-Basisbandsignale, das heisst erzeugen die entsprechenden digitalen Basisbandsignale.

An die Analog-Digital-Umsetzer ADC1, ADC2 schließen sich baugleiche Korrekturstufen STC1 bzw. STC2 an, mittels welchen das erfindungsgemäße Verfahren realisiert wird. Das heisst, dass diese Stufen in noch näher zu beschreibender Weise den zeitlichen Verlauf einer stufenförmigen DC-Störung innerhalb eines Bursts ermitteln und an ihrem Ausgang ein stufenkorrigiertes Basisbandsignal bereitstellen. Hierfür benötigen die Korrekturstufen STC1 bzw. STC2 Triggersignale TG, TG', welche die Zeitlage einer DC-Störung im Burst angeben.

Die stufenkorrigierten digitalen Basisbandsignale werden nach einer digitalen Filterung (nicht dargestellt) einem Entzerrer EQ zugeführt, welcher eine adaptive Entzerrung vornimmt. Bei der adaptiven Entzerrung werden die durch den Mobilfunkkanal infolge Mehrwegeausbreitung eingebrachten Symbolinterferenzen unter Berücksichtigung der aktuellen Übertagungseigenschaften des Mobilfunkkanals beseitigt. In bekannter Weise geschieht dies dadurch, dass mittels eines Kanalschätzers zunächst eine Messung der Übertragungseigenschaften des Mobilfunkkanals vorgenommen wird (sogenannte Kanalschätzung) und im folgenden unter Verwendung der bei der Kanalschätzung ermittelten Kanalparameter (Impulsantwort des Mobilfunkkanals) eine adaptive Datendetektion durchgeführt wird.

Da das auszusendende Signal im Sender üblicherweise mittels eines Kanalkodierers für die Übertragung über den Mobilfunkkanal aufbereitet wird (der Kanalkodierer fügt dem Nutzsignal Redundanz hinzu), ist ein Kanaldekodierer DCO vorgesehen, welcher mit Hilfe der Redundanzinformation eine Verringerung der Übertragungsfehler bewirkt. Nach einer anschließenden Quellendekodierung (nicht dargestellt) wird das digitale Signal mittels eines Digital-Analog-Umsetzers DAC in ein analoges Signal gewandelt und einer Nachrichtensenke S (beispielsweise Lautsprecher) zugeführt.

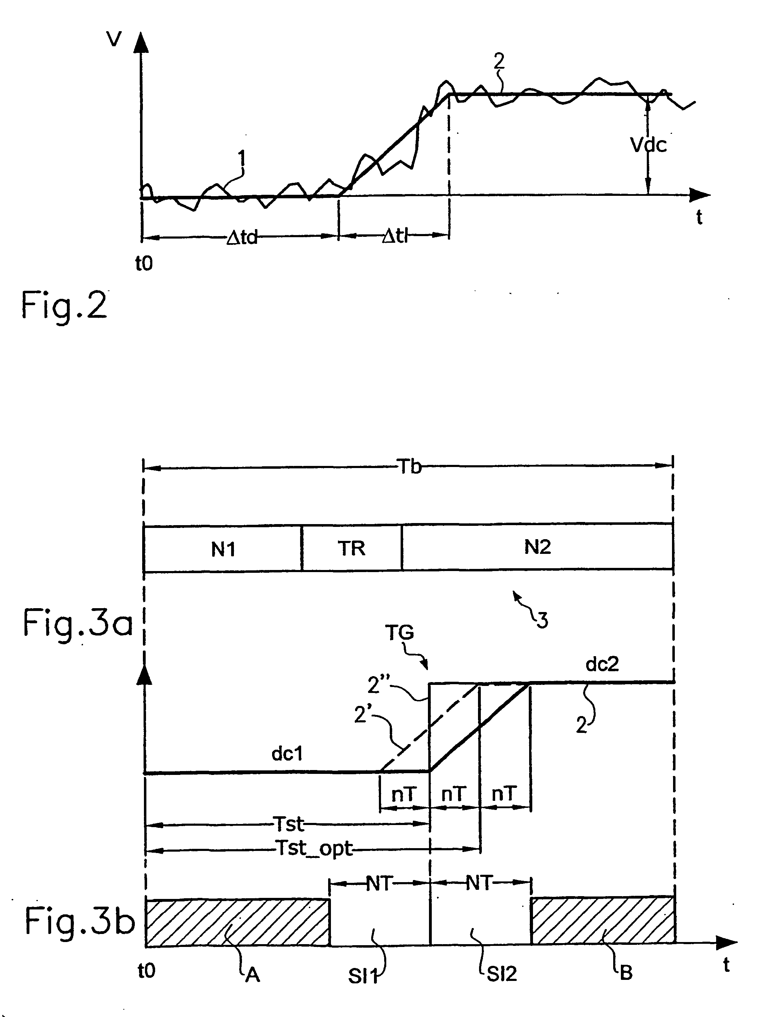

Fig. 2 zeigt den zeitlichen Verlauf 1 einer im Basisbandsignal auftretenden stufenförmigen DC-Störung, dargestellt als analoges Spannungssignal V gegenüber der Zeit t. Charakteristikum dieser Störung ist ein Verlauf 1, dessen DC-Offset zunächst im wesentlichen konstant ist, sich dann signifikant ändert und ab einem späteren Zeitpunkt wieder im wesentlichen konstant bleibt. Eine solche Störung läßt sich in vereinfachter Weise durch ein Stufensignal 2 mit mehr oder weniger steiler Anstiegsflanke 2a annähern. Dieses Stufensignal 2 läßt sich durch die folgenden drei Parameter beschreiben:

$\Delta$td: Anfangszeitpunkt der DC-Stufe bezogen auf eine Referenzzeit t0
$\Delta$tl: Zeitdauer des Stufenanstiegs
Vdc: Höhe der DC-Stufe

Charakteristisch für die hier betrachteten stufenförmigen DC-Störungen 1 ist, dass $\Delta$tl wesentlich kleiner als die Zeitdauer Tb eines Bursts ist. Ein solcher DC-Offset wird im folgenden auch als dynamischer DC-Offset bezeichnet. Die Referenzzeit t0 ist stets der Anfangszeitpunkt des Bursts, in welchem die stufenförmige DC-Störung 1 auftritt.

Bursts sind kurze Teilnehmersignale, deren Zeitdauer Tb üblicherweise geringer ist als die typische Zeitdauer, in der sich die Übertragungseigenschaften der Funkstrecke ändern.

Das Verwenden von Bursts ist Voraussetzung für den Einsatz einer TDMA-(Time Division Multiple Access-) Vielfachzugriffs-komponente. In diesem Fall wird üblicherweise pro Zeitschlitz genau ein Burst übertragen. Z.B. wird ein GSM-(Global System for Mobile Communications)-Signal aus TDMA-Rahmen aufgebaut, welche acht Zeitschlitze (Bursts) enthalten. Bursts können jedoch auch in einem Signal ohne TDMA-Komponente eingesetzt werden.

Ein HF-Empfänger wird bezüglich des dynamischen DC-Offsets durch den Parameter AM-Unterdrückung (AM_sup), angegeben in Dezibel (dB), charakterisiert. Bei einem nicht realisierbaren idealen HF-Empfänger ist die AM-Unterdrückung unendlich groß, das heisst die Höhe der am Ausgang von STC1 bzw. STC2 auftretenden DC-Stufe ist stets Null, unabhängig davon, wie hoch der Pegel eines Störers in einem anderen Kanal ist. Bei einer endlichen AM-Unterdrückung entsteht dagegen eine DC-Stufe am Eingang des Entzerrers EQ mit einer Höhe |Vdc| > 0. Diese kann gemäß der folgenden Beziehung aus dem Eingangssignalpegel L_sig, dem Störsignalpegel L_interfer, dem Wert der AM-Unterdrückung AM_sup und der maximalen Signalamplitude Vsig abgeleitet werden:

$$\frac{|Vdc|}{Vsig} = 10^{\frac{(L\_int\,erfer - L\_sig - AM\_sup)}{20}}$$

Nach ETSI: "GSM recommendations 05.05 Version 8.5.0", Juli 2000, wird für GSM ein Test für die AM-Unterdrückung mit L_interfer = -31 dBm und dem maximal erlaubten Eingangssignalpegel L_sig_max= -99 dBm vorgeschrieben (-99 dBm entspricht einer Leistung, die -99 dB unter 1mW liegt). Für GPRS (General Packet Radio Service) Kanäle sind unterschiedliche Werte für L_sig_max definiert. Z.B. ist für das Kodierschema CS3RLC unter der Ausbreitungsbedingung RA250 der Wert L_sig_max = -93 dBm definiert. Die Tabelle 1 gibt die relativen DC-Stufenwerte Vdc/Vsig für "klassische" GSM Kanäle und für das GPRS-Kodierschema CS3RLC im Fall der Ausbreitungsbedingung RA250 wieder.

Tab. 1

| AM-Unterdrückung [dB] | Vdc/Vsig [%] | |
|---|---|---|
| | GSM (klassisch) | CS3RLC RA250 |
| 74 | 50,1 | 25,1 |
| 78 | 31,6 | 15,8 |
| 82 | 20,0 | 10,0 |
| 86 | 12,6 | 6,3 |
| 90 | 8,0 | 4,0 |
| 94 | 5,0 | 2,5 |

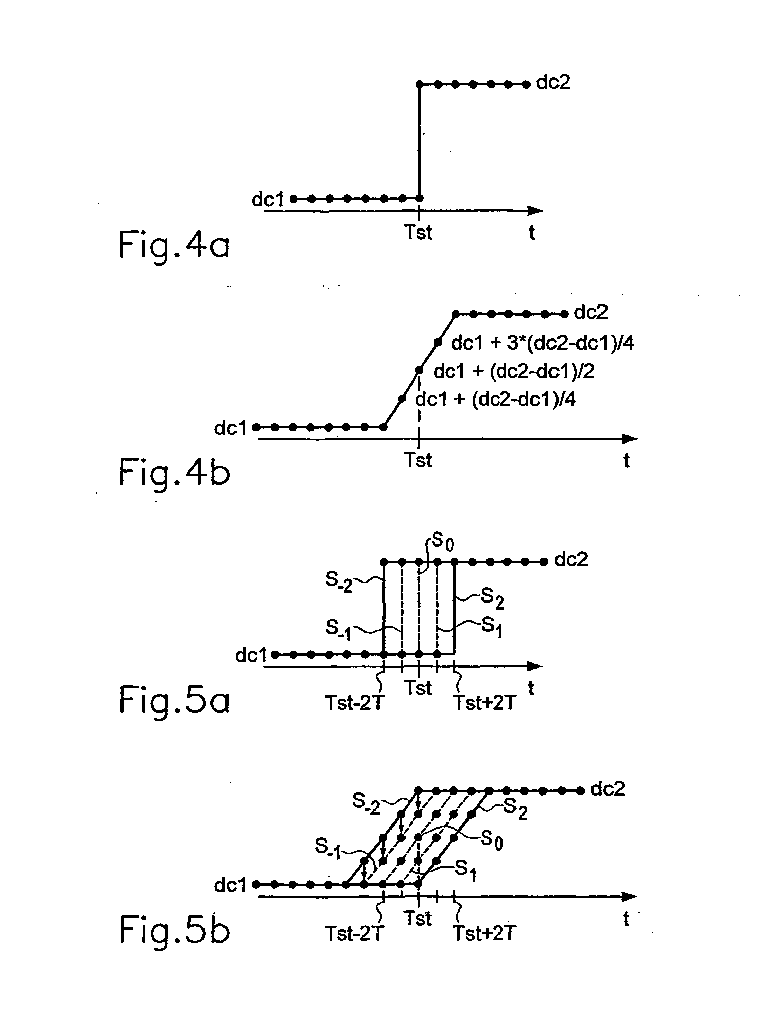

Die Figuren 3a und 3b verdeutlichen das erfindungsgemäße Verfahren zur Kompensation einer stufenförmigen DC-Störung.

In Fig. 3a ist eine mögliche Datenstruktur eines Bursts 3 dargestellt. Der hier betrachtete GSM-Burst 3 weist einen ersten nachrichtentragenden Teil N1, eine als Mittambel realisierte Trainingssequenz TR und einen zweiten nachrichtentragenden Teil N2 auf. Bei GSM umfassen die Burst-Teile N1 und N2 jeweils 57 Datensymbole (Bits) und die Trainingssequenz TR ist 26 Datensymbole lang.

In Fig. 3b wird erläutert, wie das Stufensignal 2 einer stufenförmigen DC-Störung 1 in den Korrekturstufen STC1 bzw. STC2 ermittelt bzw. rekonstruiert wird. Das Stufensignal 2 ist zunächst unbekannt. Der HF-Empfänger detektiert eine Veränderung des Gleichanteils in den Basisbandsignalen des I-und Q-Zweigs und erzeugt daraufhin zum Zeitpunkt Tst, gerechnet vom Burst-Anfang t0, ein Triggersignal TG. Die Erzeugung dieses Triggersignals TG kann grundsätzlich sowohl im analogen als auch im digitalen Signalverarbeitungsabschnitt erfolgen.

Aufgrund von Ungenauigkeiten des Triggerzeitpunkts Tst muss dieses die zeitliche Lage der DC-Stufe 2a nicht notwendigerweise exakt wiedergeben. Z.B. kann der Triggerzeitpunkt Tst, wie in Fig. 3b dargestellt, bereits am Beginn des Flankenanstiegs der tatsächlichen DC-Stufe 2a im Basisband liegen. Ein optimaler Triggerzeitpunkt Tst, welcher exakt bei halber Stufenhöhe der DC-Stufe 2a auftritt, ist in Fig. 3b mit Tst_opt dargestellt.

Nach Auftreten eines Triggersignals TG zum Zeitpunkt Tst wird die Höhe Vdc der DC-Stufe 2a folgendermaßen geschätzt. Es werden zwei Schutzzeitintervalle SI1 und SI2 von jeweils N Datensymbolen vor und nach dem Triggerzeitpunkt Tst definiert, und die entsprechenden Signalanteile werden für die Schätzung der Stufenhöhe Vdc nicht berücksichtigt. Die Anzahl N ist abhängig von der zeitlichen Unsicherheit des Triggersignals TG. Je größer diese ist, desto größer muss auch N gewählt werden. Die Schutzzeitintervalle SI1, SI2 können auch eine unterschiedliche Länge aufweisen.

Anschließend wird eine erste Signalauswertung vom Burst-Anfang t0 bis zum Anfang des ersten Schutzzeitintervalls SI1 (d.h. im schraffierten Abschnitt A des Bursts 3, siehe den unteren Teil der Fig. 3b), durchgeführt und ein Schätzwert dc1 für den DC-Offset links von dem Triggerzeitpunkt Tst ermittelt. Es wird eine zweite Signalauswertung beginnend mit dem Ende des zweiten Schutzzeitintervalls SI2 bis zum Ende des Bursts 3 (schraffierter Abschnitt B) vorgenommen, und ein Schätzwert dc2 für den DC-Offset rechts von dem Triggerzeitpunkt Tst ermittelt. Die Differenz dc2-dc1 dieser beiden DC-Offset-Werte ist die geschätzte Stufenhöhe Vdc.

Für die Berechnung der DC-Offset-Werte dc1, dc2 der Burst-Teilabschnitte A und B können verschiedene Verfahren eingesetzt werden, z.B. eine Mittelwertbildung oder die Einpassung der I- und Q-Signalwerte in einen Kreis.

Zur Berechnung des Stufensignals 2 der stufenförmigen DC-Störung 1 wird ferner eine Größe benötigt, welche Auskunft über die Steilheit der Stufenflanke 2a gibt.

Die einfachste Möglichkeit besteht darin, die Steilheit der Stufenflanke 2a durch eine Stufenmodell über einen Parameter n vorzugeben. Im Stufenmodell erstreckt sich der Anstieg der Stufenflanke über einen Zeitraum von 2nT, wobei T die Symbolzeitdauer bezeichnet. n = 0 entspricht einem sprunghaften Stufenanstieg, größere Werte von n entsprechen einem flacheren Anstieg der DC-Stufe 2a.

Mit diesen Werten für Tst, dc2, dc1 und n wird der zeitliche Verlauf der stufenförmigen DC-Störung 1 berechnet. Dieser ist für den Triggerzeitpunkt Tst und n ≠ 0 (rampenförmiges Stufenmodell) durch die Linie 2', für den Triggerzeitpunkt Tst und n = 0 (Stufenmodell mit sprunghaftem Flankenanstieg) durch die Linie 2" und für den "richtigen" Triggerzeitpunkt Tst_opt durch die fett eingezeichnete Linie 2 dargestellt (sofern dc2-dc1 = Vdc richtig ermittelt wurde). Die Linien 2, 2' und 2" fallen in der Darstellung in Fig. 3b außerhalb der Stufenflanke 2a zusammen.

Es wird deutlich, dass aufgrund der Schutzzeitintervalle SI1, SI2 die Stufenhöhe dc2-dc1 unabhängig von dem genauen Triggerzeitpunkt ermittelt wird. Fehler bei der Auslösung des Triggerzeitpunkts Tst gegenüber Tst_opt bewirken lediglich eine Verschiebung des berechneten zeitlichen Verlaufs 2' bzw. 2" der rekonstruierten DC-Störung relativ zu der DC-Stufe 2 entlang der Zeitachse t.

Die Figuren 4a und 4b zeigen den geschätzten zeitlichen Verlauf der stufenförmigen DC-Störung 1 für unterschiedliche Stufenmodelle. In Fig. 4a wird das Stufenmodell mit sprunghaftem Stufenanstieg (n = 0) vorausgesetzt. Ein rampenartiges Stufenmodell mit n = 2, bei welchem sich die Stufenflanke über fünf Datensymbole (vier Symbolzeitdauern) erstreckt, ist in Fig. 4b dargestellt. Bei beiden Darstellungen sind die für jedes Datensymbol berechneten DC-Offset-Werte als Punkte dargestellt, durch welche gerade Linien hindurchgelegt sind. Im Fall der Fig. 4a liegt der Triggerzeitpunkt Tst stets in der senkrechten Stufenanstiegsflanke, in Fig. 4b wird der rampenartige Stufenanstieg in der Weise berechnet, dass die Flanke der DC-Stufe zum Triggerzeitpunkt Tst ihre halbe Höhe aufweist. Die DC-Offset-Werte dc_st(i) innerhalb der Stufenflanke berechnen sich somit nach der Beziehung:

$$dc\_st(i) = dc1 + i*(dc2-dc1)/2n \text{ mit } i = 0, .., 2n$$

Zur Kompensation der stufenförmigen DC-Störung 1 in dem digitalen Basisbandsignal werden die gemäß der vorstehenden Beschreibung berechneten DC-Offset-Werte über den gesamten Burst 3 von dem digitalen Basisbandsignal subtrahiert. Die Subtraktion wird für jeden einzelnen Burst in den Korrekturstufen STC1 bzw. STC2 vorgenommen.

Zur Erhöhung der Genauigkeit des Triggerzeitpunkts Tst wird das stufenkorrigierte Basisbandsignal iterativ berechnet. Dies wird anhand der Fig. 5a für das Stufenmodell mit sprunghaftem Anstieg und anhand der Fig. 5b für das Stufenmodell mit rampenartigem Stufenanstieg erläutert. Bei der iterativen Erzeugung des stufenkorrigierten Basisbandsignals wird zunächst in der bereits beschriebenen Weise der DC-Stufenverlauf $S_0$ zu dem ermittelten Triggerzeitpunkt Tst berechnet. Sodann werden weitere DC-Stufenverläufe $S_{-2}$, $S_{-1}$, $S_1$ und $S_2$ zu Triggerzeitpunkten Tst-2T, Tst-T, Tst+T und Tst+2T links und rechts von Tst in derselben Weise berechnet. Die entsprechenden Stufenverläufe sind in den Figuren 5a und 5b für die beiden Stufenmodelle gezeigt.

Anschließend wird das digitale Basisbandsignal mit jedem der Stufenverläufe $S_{-2}$, $S_{-1}$, $S_0$, $S_1$ und $S_2$ korrigiert.

In einem folgenden Schritt findet eine Bewertung der auf diese Weise erhaltenen mehreren stufenkorrigierten digitalen Basisbandsignale statt. Die Bewertung erfolgt allgemein in der Weise, dass dasjenige stufenkorrigierte Basisbandsignal ausgewählt und für die weitere Signalverarbeitung herangezogen wird, welches hinter dem Entzerrer EQ die beste Signalqualität aufweist.

Liegt die Stufenflanke im Bereich der Trainingssequenz TR des Datenbursts, besteht eine einfache Möglichkeit zur Ermittlung dieses am besten korrigierten Basisbandsignals darin, die Datenwerte der stufenkorrigierten Basisbandsignale jeweils mit den Datenwerten der bekannten Trainingssequenz TR zu korrelieren. Dasjenige stufenkompensierte Datensignal mit dem besten Korrelationsergebnis wird dann für die weitere Signalverarbeitung verwendet.

Aus den Figuren 5a und 5b wird deutlich, dass für die Berechnung der verschiedenen DC-Stufenverläufe nur wenige Datenwerte im Bereich der Stufenflanke neu berechnet werden müssen. Demzufolge erfordert auch die Berechnung der verschiedenen stufenkorrigierten Basisbandsignale nur einen verhältnismäßig geringen Rechenaufwand.

Eine weitere vorteilhafte Maßnahme der Erfindung besteht darin, die DC-Stufenkorrektur nicht zwingend sondern nur dann durchzuführen, wenn der Triggerzeitpunkt Tst ausreichend weit von den Burst-Grenzen entfernt liegt. Zu diesem Zweck werden am Anfang und am Ende des Bursts liegende erste Zeitintervalle (nicht dargestellt) definiert. Sofern der Triggerzeitpunkt Tst innerhalb eines dieser ersten Zeitintervalle fällt, wird keine DC-Stufenkorrektur in der beschriebenen Weise durchgeführt, sondern der DC-Offset wird wie üblich für den gesamten Burst als konstant behandelt und korrigiert. Dieser konstante DC-Offset wird z.B. anhand von Datensymbolen, die im mittleren Bereich des Bursts liegen, ermittelt und durch Subtraktion aus dem digitalen Basisbandsignal entfernt.

Als zweites Zeitintervall wird im folgenden dasjenige Zeitintervall bezeichnet, in welchem die Trainingssequenz TR in dem Burst 3 liegt. Die beiden vorstehend erläuterten Maßnahmen (iterative Erzeugung des stufenkorrigierten Basisbandsignals und DC-Stufenkompensation in Abhängigkeit von der Position von Tst) lassen sich dann in folgender Weise vorteilhaft kombinieren:

- Tst liegt in einem der ersten Intervalle:

   Es wird keine DC-Stufenkompensation, sondern gegebenenfalls lediglich die Kompensation eines konstanten DC-Offsets durchgeführt;

- Tst liegt in dem zweiten Zeitintervall:

   Da die Trainingssequenz TR zur Schätzung der Impulsantwort des Mobilfunkkanals benötigt wird, ist in diesem Fall eine DC-Stufenkompensation mit besonders hoher Zeitgenauigkeit erforderlich. Daher wird die iterative DC-Stufenkompensation eingesetzt.

- Tst liegt weder in ersten noch in zweiten Zeitintervallen:

   Es wird die beschriebene "normale" DC-Stufenkompensation nach einem der genannten Stufenmodelle durchgeführt.

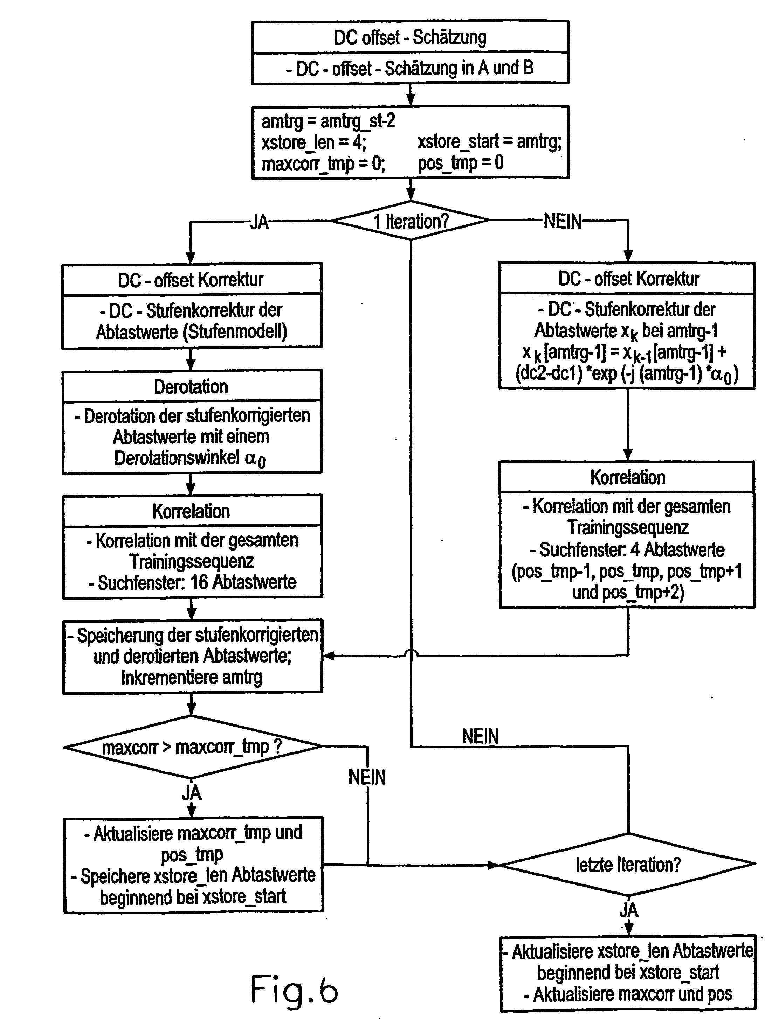

Ein detailliertes Ablaufdiagramm für die iterative Berechnung eines stufenkompensierten digitalen Basisbandsignals ist in Fig. 6 gezeigt.

In einem ersten Schritt wird der DC-Offset in den Burstabschnitten A und B (das heisst unter Berücksichtigung des Schutzzeitintervalls) getrennt geschätzt.

In einem nächsten Schritt wird eine Initialisierung vorgenommen. Mit amtrg wird die diskrete Zeit, gemessen, in Einheiten der Symbolzeitdauer T, bezeichnet. Die Größe amtrg_st entspricht Tst/T und gibt die Nummer des Datensymbols an, zu welchem das Triggersignal auftritt. Folgende Initialisierungen werden gewählt:

   amtrg = amtrg_st - 2
   xstore_len = 4
   maxcorr_tmp = 0
   xscore_start = amtrg
   pos_tmp = 0

Dabei bezeichnen xstore_len die Länge 2N der beiden Schutzzeitintervalle, maxcorr_tmp bezeichnet einen temporären Korrelationswert, xstore_start bezeichnet einen diskreten Startzeitpunkt für die Abspeicherung von Datensymbolen und pos_tmp bezeichnet eine temporäre Positionsvariable.

In einem nächsten Schritt wird geprüft, ob die erste Iteration durchzuführen ist. Ist dies der Fall, wird eine Stufenkorrektur des digitalen Basisbandsignals für alle Abtastwerte $x_k$ unter Verwendung des Stufenmodells mit sprunghaftem Stufenanstieg vorgenommen.

In einem nächsten Schritt wird eine Derotation der stufenkorrigierten Abtastwerte unter Verwendung eines Derotationswinkels $\alpha_0$ vorgenommen. Der Derotationswinkel $\alpha_0$ ist von dem verwendeten Modulationstyp abhängig.

Die derotierten stufenkorrigierten Abtastwerte werden anschließend mit der gesamten Trainigssequenz TR korreliert. Das Suchfenster beträgt 16 Abtastwerte. Als Korrelationsergebnis wird ein Wert maxcorr erhalten.

In einem nächsten Schritt werden die stufenkorrigierten und derotierten Abtastwerte gespeichert. Ferner wird amtrg inkrementiert.

Anschließend wird die Bedingung maxcorr > maxcorr_tmp überprüft.

Sofern diese Bedingung erfüllt ist, werden die Werte für maxcorr_tmp und pos_tmp aktualisiert und die mittleren xstore_len Abtastwerte, beginnend bei xstore_start, werden abgespeichert. Sofern die obige Bedingung nicht erfüllt ist, wird dieser Schritt übersprungen.

In einem nächsten Schritt wird überprüft, ob bereits die letzte Iteration vorliegt. Da dies bei der ersten Iteration noch nicht der Fall ist, geht das Verfahren wieder zu dem bereits erwähnten Bedingungsschritt über, in welchem geprüft wird, ob die erste Iteration ansteht.

Dies ist nicht der Fall. Das Verfahren nimmt daraufhin in einem nächsten Schritt eine DC-Offset-Korrektur der Abtastwerte $x_k$ zu der diskreten Zeit amtrg-1 vor. Die hierfür verwendete Gleichung lautet:

$$x_k[\text{amtrg-1}] = x_{k-1}[\text{amtrg-1}] + (dc2-dc1)*\exp(-j(\text{amtrg-1})*\alpha_0)$$

Dabei bezeichnet j die imaginäre Einheit.

Die Korrelation der auf diese Weise berechneten stufenkorrigierten und derotierten Abtastwerte mit der gesamten Trainingssequenz TR findet im nächsten Schritt statt. Für das Suchfenster werden vier Abtastwerte an den Positionen pos_tmp-1, pos_tmp, pos_tmp+1 und pos_tmp+2 benötigt.

Nach der Korrelation werden die stufenkorrigierten und derotierten Abtastwerte in dem bereits bei der ersten Iteration beschriebenen Schritt gespeichert und ein Vergleich des aktuellen Korrelationsergebnisses mit dem bisherigen Korrelationsergebnis durchgeführt. Je nach Ausgang dieses Vergleichs wird dann der bereits bei der ersten Iteration beschriebene Speicherschritt durchgeführt.

Die Iterationsschleife wird solange durchlaufen, bis die letzte Iteration erreicht ist. In diesem Fall werden die mittleren xstore_len Abtastwerte, beginnend bei xstore_start, aktualisiert. Ferner werden auch die Werte für maxcorr und pos aktualisiert.

Das anhand Fig. 6 erläuterte Ausführungsbeispiel zur iterativen Erzeugung eines stufenkorrigierten Basisbandsignals unter Zugrundelegung des Stufenmodells mit sprunghaftem Stufenanstieg kann in analoger Weise auf das Stufenmodell mit rampenartiger Stufenflanke übertragen werden. Die wesentlichen Unterschiede bestehen darin, dass im Initialisierungsschritt eine weitere Größe ddc = (dc2-dc1)/4 zu definieren und xstore_len = 7 und xstore_start = amtrg-1 gesetzt werden. Die Berechnungsvorschrift für die derotierten DC-Offset-Korrekturwerte in der Schleife lautet dann für i = amtrg-2, .., amtrg+1

$$x_k[i]=x_{k-1}[i] +ddc*\exp(-j*i*\alpha_0)$$

Das beschriebene Verfahren wurde mit dem COSSAP bittrue-Modell für unterschiedliche Werte der AM-Unterdrückung AM_sup untersucht. Simuliert wurden die logischen Kanäle GSM TCHHS, GSM SCH und GPRS CS3RLC. Die folgenden Simulationsbedingungen wurden eingestellt:

Umgebung: ländliches Gebiet (RA: rural area)
Geschwindigkeit: 250km/h
Anzahl der Rahmen: 10000
Eingangssignalpegel: -99dBm (TCHHS/SCH) bzw. -93dBm (CS3RLC) Störpegel: -31dBm
$\Delta$td: 73T (d.h. 73 Symbole)
$\Delta$tl: 4,5T (d.h. 4,5 Symbole)
N: 5T (d.h. 5 Symbole)
Fehler von Tst: -2T (d.h. -2 Symbole)

Es zeigte sich, dass bei kleiner AM-Unterdrückung (das heisst großer DC-Stufe) ein Gewinn von mehr als 3 dB (bei AM_sup = 78 dB) erreicht werden kann. Bei sehr kleiner AM-Unterdrükkung (AM_sup = 74 dB) konnte nur bei Vornahme der erfindungsgemäßen DC-Stufenkompensation eine Konvergenz bei der Simulation erreicht werden. Bei sehr hoher AM-Unterdrückung (d.h. sehr kleiner DC-Stufenstörung) führt die DC-Stufenkompensation aufgrund einer ungenauen DC-Schätzung zu einem etwas schlechteren Ergebnis als die DC-Kompensation ohne Berücksichtigung der Stufe.

**Patentansprüche**

**1.** Verfahren zur Kompensation einer stufenförmigen DC-Störung (1) in einem digitalen Basisbandsignal eines Homodyn-Funkempfängers, mit den Schritten:

a) Ermitteln einer Zeitlage Tst, bei welcher die stufenförmige DC-Störung (1) innerhalb eines Bursts (3) auftritt;
b) Berechnen von verschiedenen zeitlichen Verläufen ($S_{-2}$, $S_{-1}$, $S_0$, $S_1$, $S_2$) der stufenförmigen DC-Störung (1) für mehrere Zeitlagen um Tst;

c) Herausrechnen dieser Verläufe aus dem digitalen Basisbandsignal zur Erzeugung verschiedener stufenkorrigierter Basisbandsignalversionen;

d) Auswerten der auf diese Weise erhaltenen verschiedenen stufenkorrigierten Basisbandsignalversionen gemäß einem vorgegebenen Kriterium; und

e) Auswahl einer der stufenkorrigierten Basisbandsignalversionen in Abhängigkeit von dem Auswerteergebnis.

**2.** Verfahren nach Anspruch 1,
**dadurch gekennzeichnet,**
**dass** vor Schritt b) der zusätzliche Schritt ausgeführt wird:

- Schätzen der Höhe der stufenförmigen DC-Störung (1) durch getrenntes Auswerten des Basisbandsignals zeitlich vor und hinter Tst;

**dass** das Berechnen in Schritt b) folgendes berücksichtigt:

- die geschätzte Höhe der stufenförmigen DC-Störung (1); und dass das Herausrechnen in Schritt c) folgendermaßen durchgeführt wird:

- Subtraktion der berechneten zeitlichen Verläufe von dem digitalen Basisbandsignal zur Erzeugung verschiedener stufenkorrigierter Basisbandsignalversionen.

**3.** Verfahren nach Anspruch 1 oder 2,
**gekennzeichnet durch** die weiteren Schritte:

- Auswerten der Position von Tst innerhalb des betrachteten Bursts; und
- Entscheiden anhand der Position von Tst, ob und/oder gemäß welcher Rechenvorschrift die Erzeugung eines stufenkorrigierten Basisbandsignals durchgeführt wird.

**4.** Verfahren nach Anspruch 3,
**dadurch gekennzeichnet,**

- **dass** erste Zeitintervalle bestimmter Intervalllänge am Anfang und/oder am Ende des Bursts vorgegeben sind, und
- **dass** nur dann, wenn Tst außerhalb dieser ersten Zeitintervalle liegt, die Korrektur der stufenförmigen DC-Störung (1) durchgeführt wird und sonst unterbleibt.

**5.** Verfahren nach einem der Ansprüche 3 oder 4,
**dadurch gekennzeichnet,**

- **dass**, sofern Tst innerhalb eines zweiten Zeitintervalls in dem Burst liegt, eine Erzeugung des stufenkorrigierten Basisbandsignals mittels verschiedener gemäß Anspruch 1 berechneter zeitlicher Verläufe ($S_{-2}$, $S_{-1}$, $S_0$, $S_1$, $S_2$) der stufenförmigen DC-Störung (1) vorgenommen wird.

**6.** Verfahren nach Anspruch 5,
**dadurch gekennzeichnet,**

- **dass** es sich bei dem zweiten Zeitintervall um das Zeitintervall handelt, in welchem die Trainingssequenz (TR) liegt,
- **dass** die verschiedenen stufenkorrigierten Basisbandsignalversionen mit der im Empfänger bekannten Trainingssequenz korreliert werden, und
- **dass** diejenige stufenkorrigierte Basisbandsignalversion mit dem besten Korrelationsergebnis als stufenkorrigiertes Basisbandsignal ausgewählt wird.

**7.** Verfahren nach Anspruch 2,
**dadurch gekennzeichnet,**

- **dass** die Schätzung der Höhe (Vdc) der stufenförmigen DC-Störung (1) unter Berücksichtigung eines Schutzzeitintervalls (ST1, ST2) um die ermittelte Zeitlage Tst herum erfolgt, wobei das Basisbandsignal innerhalb des Schutzzeitintervalls (ST1, ST2) bei der Schätzung der Höhe der DC-Störung (1) unberücksichtigt bleibt.

8. Verfahren nach einem der vorhergehenden Ansprüche,
   **dadurch gekennzeichnet,**

   - **dass** der Berechnung des zeitlichen Verlaufs bzw. der zeitlichen Verläufe ein erstes Stufenmodell zugrunde gelegt wird, bei welchem bei einem bestimmten Datensymbol des digitalen Basisbandsignals ein sprunghafter Anstieg der Stufenflanke erfolgt.

9. Verfahren nach einem der vorhergehenden Ansprüche,
   **dadurch gekennzeichnet,**

   - **dass** der Berechnung des zeitlichen Verlaufs bzw. der zeitlichen Verläufe ein zweites Stufenmodell zugrunde gelegt wird, bei welchem ein rampenartiger Anstieg der Stufenflanke über eine Zeitdauer von mehreren Datensymbolen des digitalen Basisbandsignals erfolgt.

**Claims**

1. Method to compensate for a step DC disturbance (1) in a digital baseband signal in a homodyne radio receiver, having the following steps:

   a) determination of a time Tst at which the step DC disturbance (1) occurs within a burst (3);
   b) calculation of various time profiles ($S_{-2}$, $S_{-1}$, $S_0$, $S_1$, $S_2$) of the step DC disturbance (1) for two or more times around Tst;
   c) calculation of these profiles from the digital baseband signal in order to produce the various step-corrected baseband signal versions;
   d) evaluation of the various step-corrected baseband signal versions which are obtained in this way, on the basis of a predetermined criterion; and
   e) selection of one of the step-corrected baseband signal versions as a function of the evaluation result.

2. Method according to Claim 1,
   **characterized**
   **in that** the following additional step is carried out before step b):

   - estimation of the magnitude of the step DC disturbance (1) by separate evaluation of the baseband signal at the times before and after Tst;

   **in that** the calculation process in step b) takes into account the following:

   - the estimated magnitude of the step DC disturbance (1); and in that the calculation in step c) is carried out as follows:
   - subtraction of the calculated time profiles from the digital baseband signal, in order to produce the various step-corrected baseband signal versions.

3. Method according to Claim 1 or 2, **characterized by** the following further steps:

   - a valuation of the position of the Tst within the burst being considered; and
   - decision on the basis of the position of Tst whether and/or on the basis of which calculation rule the production of a step-corrected baseband signal should be carried out.

4. Method according to Claim 3,
   **characterized**

   - **in that** first time intervals with a specific interval length are predetermined at the start and/or at the end of the burst, and

- **in that** the correction for the step DC disturbance (1) is carried out only when Tst is outside this first time interval, and is otherwise not carried out.

**5.** Method according to either Claim 3 or 4,
   **characterized**

- **in that**, when Tst is within a second time interval in the burst, the step-corrected baseband signal is produced by means of various time profiles ($S_{-2}$, $S_{-1}$, $S_0$, $S_1$, $S_2$) which are calculated in accordance with Claim 1, of the step DC disturbance (1).

**6.** Method according to Claim 5,
   **characterized**

- **in that** the second time interval is a time interval in which the training sequence (TR) occurs,
- **in that** the various step-corrected baseband signal versions are correlated with the training sequence which is known in the receiver, and
- **in that** that step-corrected baseband signal version which has the best correlation result is selected as the step-corrected baseband signal.

**7.** Method according to Claim 2,
   **characterized**

- **in that** the magnitude (Vdc) of the step DC disturbance (1) is calculated taking into account a guard time interval (ST1, ST2) around the determined time Tst, with the baseband signal within the guard time interval (ST1, ST2) being ignored in the estimate of the magnitude of the DC disturbance (1).

**8.** Method according to one of the preceding claims,
   **characterized**

- **in that** the time profile or the time profiles of the step DC disturbance (1) is/are calculated on the basis of a first step model in which a sudden rise occurs in the step flank for a specific data symbol in the digital baseband signal.

**9.** Method according to one of the preceding claims,
   **characterized**

- **in that** the time profile or the time profiles of the step DC disturbance (1) is/are calculated on the basis of a second step model, in which the step flank rises as a ramp function over a time period of two or more data symbols in the digital baseband signal.

**Revendications**

**1.** Procédé de compensation d'une interférence (1) échelonnée de courant continu dans un signal de bande de base numérique d'un récepteur radio homodyne, comprenant les stades dans lesquels :

a) on détermine une position temporelle Tst pour laquelle l'interférence (1) échelonnée de courant continu se produit au sein d'une rafale (3) ;
b) on calcule diverses variations ($S_{-2}$, $S_{-1}$, $S_0$, $S_1$, $S_2$) en fonction du temps de l'interférence (1) échelonnée de courant continu pour plusieurs positions temporelles autour de Tst ;
c) on calcule ces variations à partir du signal de bande de base numérique pour produire diverses versions du signal de bande de base corrigé en échelons ;
d) on exploite les diverses versions du signal de bande de base corrigé en échelons ainsi obtenues suivant un critère prescrit ; et
e) on choisit l'une des versions du signal de bande de base corrigé en échelons en fonction du résultat de l'exploitation.

**2.** Procédé suivant la revendication 1,

**caractérisé**
**en qu'**avant le stade b), on effectue le stade supplémentaire dans lequel :

- on estime l'amplitude de l'interférence (1) échelonnée de courant continu par une exploitation séparée du signal de bande de base dans le temps avant et après Tst ;

en ce que le calcul au stade b) tient compte de ce qui suit :

- l'amplitude estimée de l'interférence (1) échelonnée de courant continu ; et

en ce que l'on effectue le calcul au stade c) de la façon suivante :

- on soustrait les variations calculées en fonction du temps du signal de bande de base numérique pour produire diverses versions du signal de bande de base corrigé en échelons.

3.  Procédé suivant la revendication 1 ou 2,
      **caractérisé par** les stades supplémentaires dans lesquels :

- on exploite la position de Tst au sein de la rafale considérée ; et
- on décide au moyen de la position de Tst si et/ou suivant quelle prescription de calcul la production d'un signal de bande de base corrigé en échelons est effectuée.

4.  Procédé suivant la revendication 3,
      **caractérisé**

- **en ce que** l'on prescrit de premiers intervalles de temps d'une longueur déterminée au début et/ou à la fin de la rafale, et
- **en ce que**, seulement lorsque Tst se trouve en dehors de ces premiers intervalles de temps, on effectue la correction de l'interférence (1) échelonnée de courant continu et sinon on s'en abstient.

5.  Procédé suivant l'une des revendications 3 ou 4,
      **caractérisé**

- **en ce que**, pour autant que Tst se trouve dans un deuxième intervalle de temps de la rafale, on effectue une production du signal de bande de base corrigé en échelons au moyen de diverses variations ($S_{-2}$, $S_{-1}$, $S_0$, $S_1$, $S_2$) en fonction du temps calculées suivant la revendication 1 de l'interférence (1) échelonnée de courant continu.

6.  Procédé suivant la revendication 5,
      **caractérisé**

- **en ce que** le deuxième intervalle de temps est l'intervalle de temps dans lequel a lieu la séquence (TR) d'entraînement,
- **en ce que** les diverses versions du signal de bande de base corrigé en échelons sont corrélées à la séquence d'entraînement connue dans le récepteur, et
- **en ce que** l'on choisit la version du signal de bande de base corrigé en échelons ayant le meilleur résultat de corrélation comme signal de bande de base corrigé en échelons.

7.  Procédé suivant la revendication 2,
      **caractérisé**

- **en ce que** l'on effectue l'estimation de l'amplitude (Vdc) de l'interférence (1) échelonnée de courant continu en tenant compte d'un intervalle (ST1, ST2) de temps de protection autour de la position Tst temporelle déterminée, le signal de bande de base n'étant pas pris en considération dans l'intervalle (ST1, ST2) de temps de protection lors de l'évaluation de l'amplitude de l'interférence (1) de courant continu.

8.  Procédé suivant l'une des revendications précédentes,
      **caractérisé**

- **en ce qu'**il y a à la base du calcul de la variation en fonction du temps ou des variations en fonction du temps un premier modèle d'échelon dans lequel, pour un symbole de données déterminé du signal de bande de base numérique, il s'effectue une augmentation à saut du front de l'échelon.

9. Procédé suivant l'une des revendications précédentes,
   **caractérisé**

- **en ce qu'**à la base du calcul de la variation en fonction du temps ou des variations en fonction du temps, il y a un deuxième modèle d'échelon dans lequel a lieu une augmentation en rampe du front d'échelon sur un laps de temps de plusieurs symboles de données du signal de bande de base numérique.

Fig.1

Fig.2

Fig.3a

Fig.3b

Fig.4a

dc1 + 3*(dc2-dc1)/4

dc1 + (dc2-dc1)/2

dc1 + (dc2-dc1)/4

Fig.4b

Fig.5a

Fig.5b

| DC offset - Schätzung |
|---|
| - DC - offset - Schätzung in A und B |

| amtrg = amtrg_st-2 |
|---|
| xstore_len = 4;        xstore_start = amtrg; |
| maxcorr_tmp = 0;     pos_tmp = 0 |

JA ─── 1 Iteration? ─── NEIN

| DC - offset Korrektur |
|---|
| - DC - Stufenkorrektur der Abtastwerte (Stufenmodell) |

| Derotation |
|---|
| - Derotation der stufenkorrigierten Abtastwerte mit einem Derotationswinkel $\alpha_0$ |

| Korrelation |
|---|
| - Korrelation mit der gesamten Trainingssequenz |
| - Suchfenster: 16 Abtastwerte |

| DC - offset Korrektur |
|---|
| - DC - Stufenkorrektur der Abtastwerte $x_k$ bei amtrg-1 $x_k[\text{amtrg-1}] = x_{k-1}[\text{amtrg-1}] + (\text{dc2-dc1}) \, {}^*\exp(-j \, (\text{amtrg-1}) \, {}^*\alpha_0)$ |

| Korrelation |
|---|
| - Korrelation mit der gesamten Trainingssequenz |
| - Suchfenster: 4 Abtastwerte (pos_tmp-1, pos_tmp, pos_tmp+1 und pos_tmp+2) |

| - Speicherung der stufenkorrigierten und derotierten Abtastwerte; Inkrementiere amtrg |
|---|

maxcorr > maxcorr_tmp ?

JA

NEIN

NEIN

| - Aktualisiere maxcorr_tmp und pos_tmp |
|---|
| - Speichere xstore_len Abtastwerte beginnend bei xstore_start |

letzte Iteration?

JA

| - Aktualisiere xstore_len Abtastwerte beginnend bei xstore_start |
|---|
| - Aktualisiere maxcorr und pos |

Fig.6